# EUROPÄISCHE PATENTSCHRIFT

(11) **EP 0 972 697 B1**
(45) Veröffentlichungstag und Bekanntmachung des Hinweises auf die Patenterteilung: **10.08.2005**
(21) Anmeldenummer: 99111005.7
(22) Anmeldetag: 10.06.1999
(51) Int. Cl.: B62D 33/067

(54) **Vordere Lagerung des kippbaren Fahrerhauses eines Lastkraftwagens**
Front bearing for tilt cab truck
Palier avant pour la cabine basculante d'un camion

(30) Priorität: 13.07.1998 DE 19831314
(43) Veröffentlichungstag der Anmeldung: 19.01.2000
(73) Patentinhaber: MAN Nutzfahrzeuge Aktiengesellschaft, 80976 München (DE)
(72) Erfinder: Kienast, Frank, Dipl.-Ing., 85726 Pfaffenhofen/Ilm (DE); Wunderlich, Walter, Dipl.-Ing., 4441 Behamberg (AT); Wührleitner, Gerhard, Dipl.-Ing., 4400 Steyr (AT)

(56) Entgegenhaltungen:
- EP-A- 0 798 198
- EP-A- 0 908 376
- GB-A- 2 188 884
- US-A- 3 948 341

## Beschreibung

Die Erfindung betrifft eine vordere Lagerung des kippbaren Fahrerhauses eines Lastkraftwagens.

Zum Stand der Technik wird auf die DE 196 12 502 A1 und die DE 44 13 414 A1 verwiesen.

Bei der Fahrerhaus-Lagerung gemäß der gattungsgemäßen DE 196 12 502 A1 ist das kippbare Fahrerhaus vorne mittels zweier Feder-Dämpfer-Beine gegenüber dem Fahrgestell-Rahmen abgefedert, von denen jedes unten an einem rahmenfesten Lagerbock und oben an einem Endbereich einer Querstabilisatorstange angelenkt ist. Letztere bildet hier das vordere Lagerorgan für das Fahrerhaus und gleichzeitig auch die Schwenkachse für dessen Kippen, wobei das Fahrerhaus über das vordere Ende einer an ihm befestigten Konsole schwenkbar an der Querstabilisatorstange angelenkt ist. Die Lage des Fahrerhauses und der Feder-Dämpfer-Beine ist gegenüber dem Fahrgestell-Rahmen über die Querstabilisatorstange durch zwei Längslenker stabilisiert, von denen jeder mit seinem vorderen Ende die Querstabilisatorstange axial gesichert aufnimmt und mit seinem hinteren Ende über ein integriertes Lager quer- und längsgeführt sowie schwenkbar in einem rahmenfesten Lagerbock aufgenommen ist.

Bei der Fahrerhaus-Lagerung gemäß der DE 44 13 414 A1 ist das kippbare Fahrerhaus vorne ebenfalls mittels zweier Feder-Dämpfer-Beine gegenüber dem Fahrgestell-Rahmen abgefedert, von denen jedes unten an einem rahmenfesten Lagerbock und oben an einem einstückigen, U-förmigen Stabilisatorlenker angelenkt ist. Dieser Stabilisatorlenker besteht aus einem linken und rechten Federblattlenker, die vorne durch eine Querstrebe miteinander verbunden sind und von denen jeder hinten fest an einem Fahrgestell-Rahmen befestigt ist. Das Fahrerhaus selbst ist über zwei Konsolen am U-förmigen Stabilisatorlenker angelenkt, und zwar jeweils in einem Lagerbock, der oben am Stabilisatorlenker am Übergangsbereich zwischen einem Federblattlenker und der Querstrebe befestigt ist. Ersichtlicherweise ist diese Fahrerhaus-Lagerung in Fahrzeuglängsrichtung gesehen relativ unnachgiebig, was den Ansprüchen modemer Fahrerhaus-Lagerungen nicht mehr gerecht wird.

Es ist demgegenüber Aufgabe der Erfindung, eine vordere Lagerung für das kippbare Fahrerhaus eines Lastkraftwagens zu schaffen, die kostengünstig herstellbar und montierbar ist, und im übrigen im Frontalcrashfall mit einem Hindernis oder einem anderen Fahrzeug einen energieverzehrenden Längsversatz des Fahrerhauses gegenüber dem Fahrgestell-Rahmen ermöglicht.

Diese Aufgabe ist erfindungsgemäß durch die im Anspruch 1 beanspruchte vordere Fahrerhaus-Lagerung gelöst.

Vorteilhafte Ausgestaltungen und Weiterbildungen dieser Lösung sind in den Unteransprüchen gekennzeichnet.

Die Vorteile der erfindungsgemäßen Lösung sind weiter hinten in Verbindung mit der nachfolgenden Beschreibung zweier Ausführungsbeispiele der Erfindung anhand der Zeichnung erläutert. In der Zeichnung zeigen:

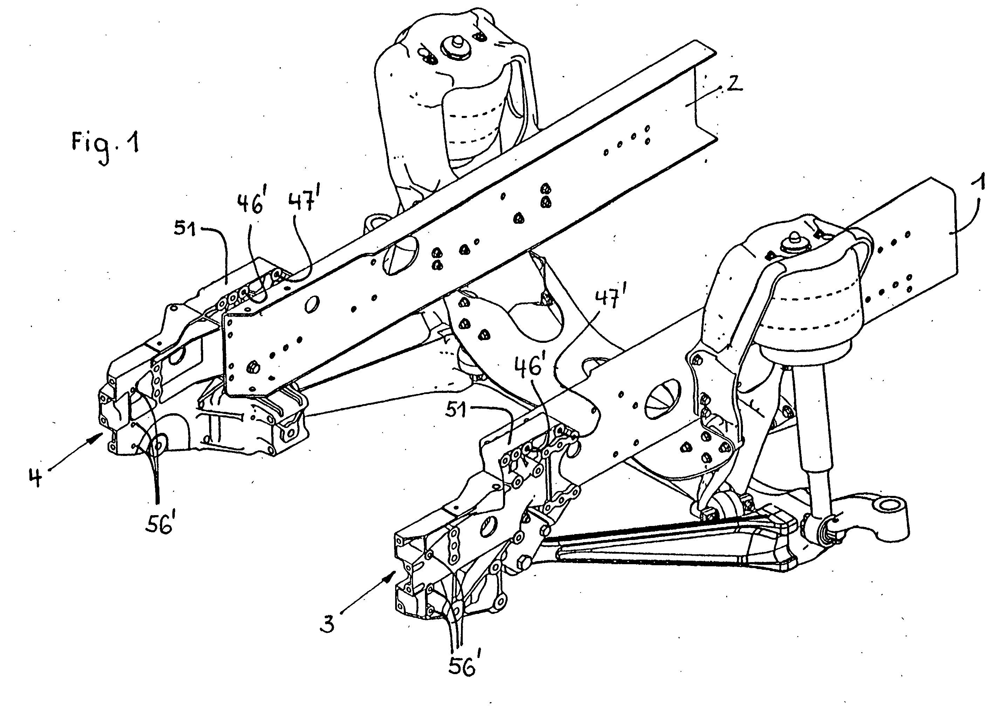

- Fig. 1: das vordere Ende eines Lastkraftwagen-Fahrgestells,
- Fig. 2: eine erste Ausführungsform der vorderen Lagerung für ein kippbares Fachrerhaus großer/hoher Bauart in Vorderansicht,
- Fig. 3: die Ausführungsform gemäß Fig. 2 in Seitenansicht von links,
- Fig. 4: die Ausführungsform gemäß Fig. 2 in Seitenansicht mit gekipptem Fahrerhaus,
- Fig. 5: die Ausführungsform der vorderen Lagerung gemäß Fig. 2 in vorderansichtiger Alleindarstellung ihrer linksseitigen Teile,
- Fig. 6: die Ausführungsform der vorderen Lagerung gemäß Fig. 2 in perspektivisch von schräg vorn gesehener Alleindarstellung ihrer linksseitigen Teile,
- Fig. 7: die Ausführungsform der vorderen Lagerung gemäß Fig. 2 in draufsichtiger Alleindarstellung ihrer linksseitigen Teile,
- Fig. 8: eine zweite Ausführungsform der vorderen Lagerung für ein kippbares Fahrerhaus normalhoher Bauart in Vorderansicht,
- Fig. 9: die Ausführungsform gemäß Fig. 8 in Seitenansicht von links,
- Fig. 10: die Ausführungsform der vorderen Lagerung gemäß Fig. 8 in perspektivisch von schräg vorn gesehener Alleindarstellung ihrer linksseitigen Teile,

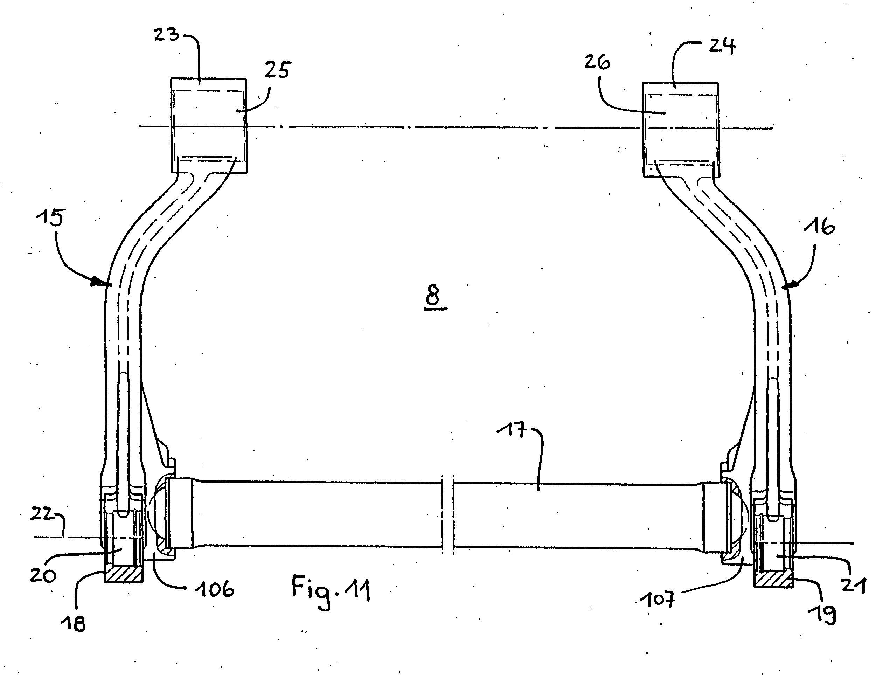

- Fig. 11: eine Ausführungsform einer U-förmigen Stabilisatorschwinge als Teil der vorderen Fahrerhaus-Lagerung in Draufsicht,
- Fig. 12: die Stabilisatorschwinge aus Fig. 11 in Seitenansicht von links,

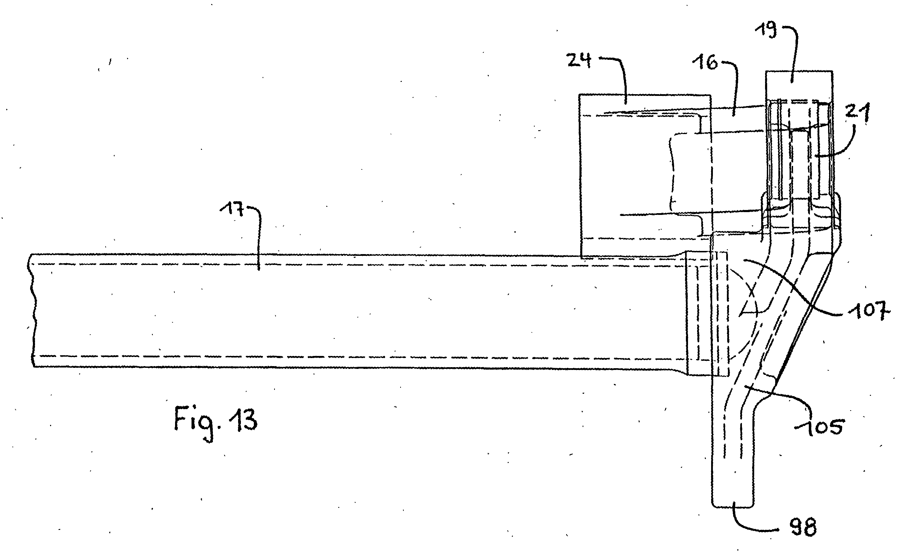

- Fig. 13: den linken Abschnitt der Stabilisatorschwinge aus Fig. 11 in Vorderansicht,

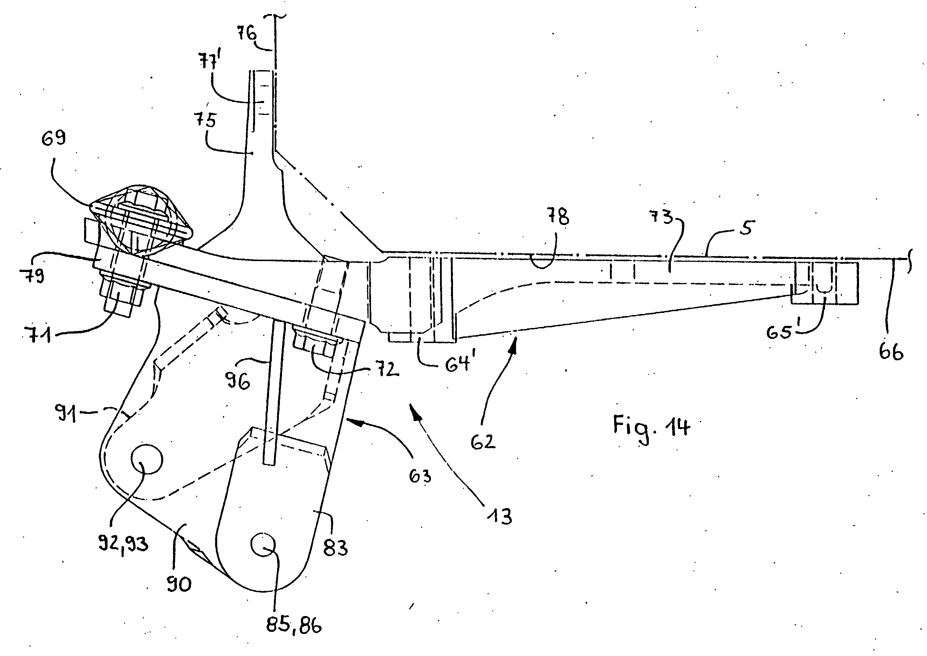

- Fig. 14: eine Ausführungsform einer Anschlußkonsole als Teil der vorderen Fahrerhaus-Lagerung in Seitenansicht,

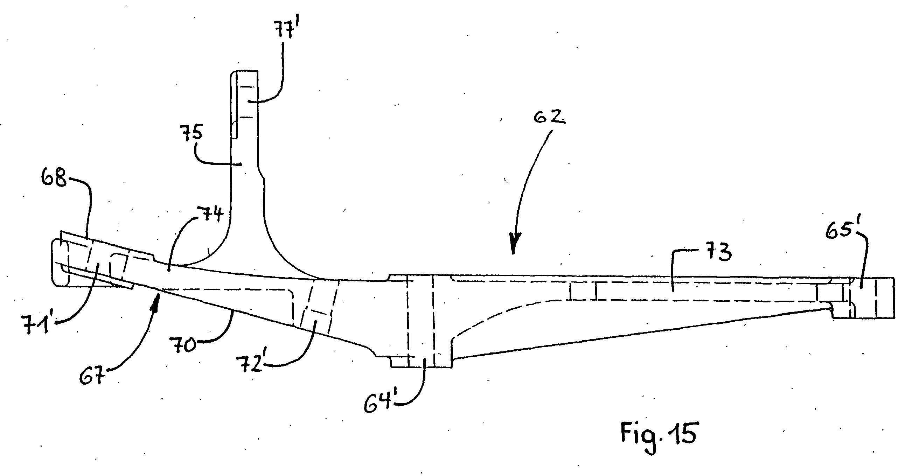

- Fig. 15: das obere Teil der Anschlußkonsole aus Fig. 14 in seitenansichtiger Alleindarstellung,

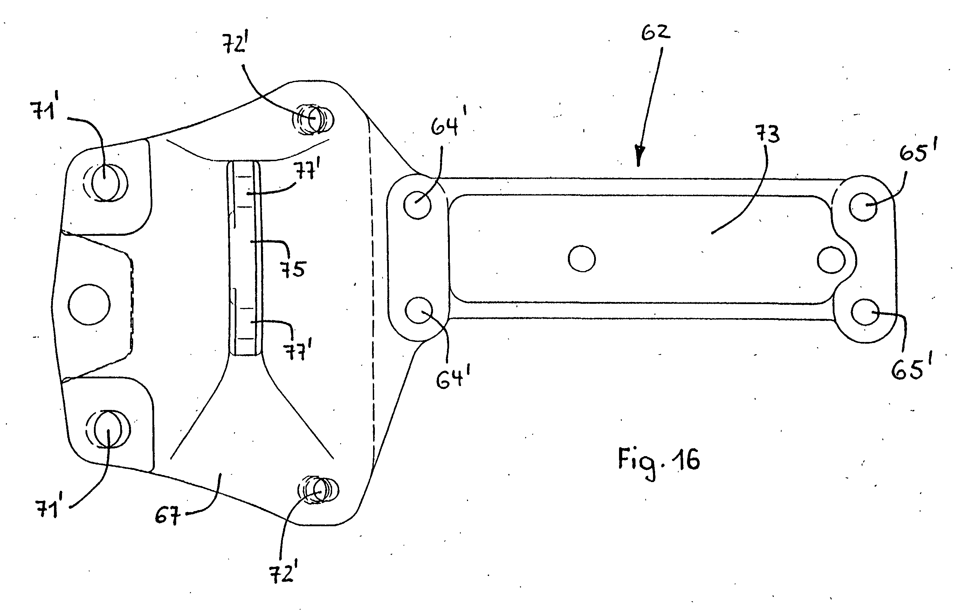

- Fig. 16: das obere Teil der Anschlußkonsole aus Fig. 14 in draufsichtiger Alleindarstellung,

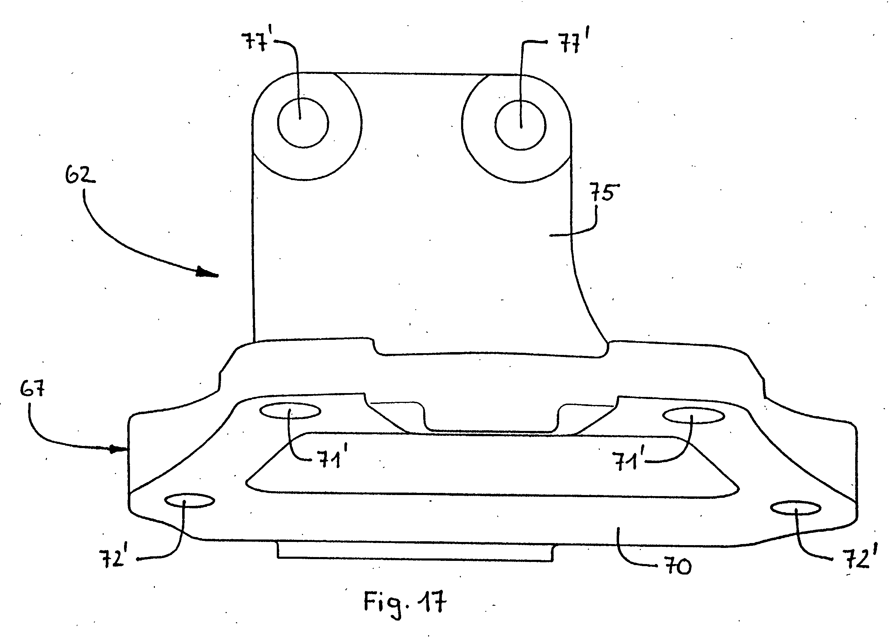

- Fig. 17: das obere Teil der Anschlußkonsole aus Fig. 14 in vorderansichtiger Alleindarstellung,

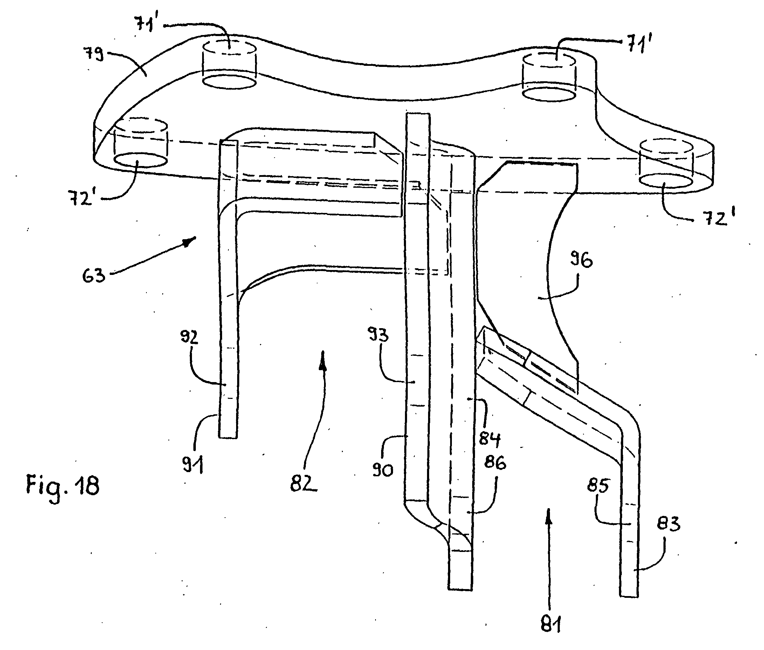

- Fig. 18: das untere Teil der Anschlußkonsole aus Fig. 14 in vorderansichtiger Alleindarstellung,

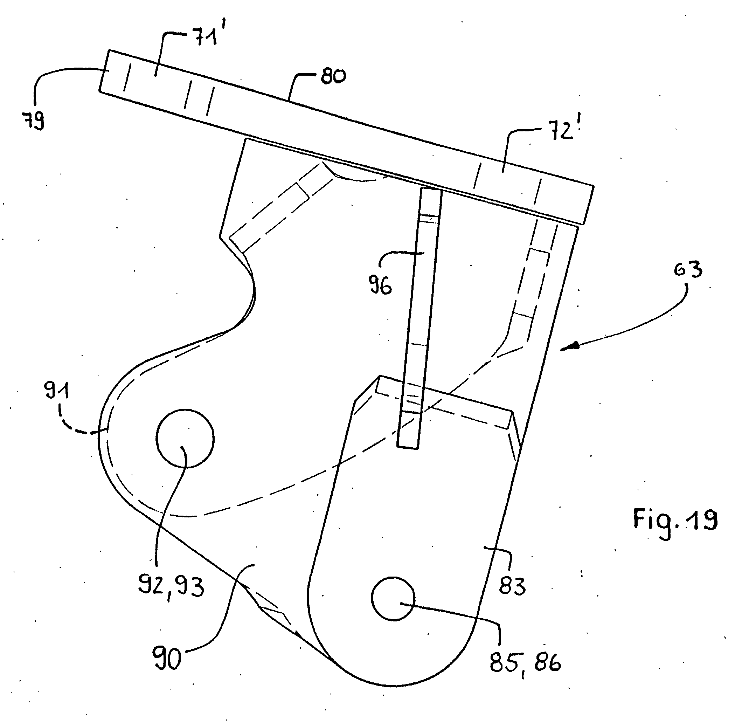

- Fig. 19: das untere Teil der Anschlußkonsole aus Fig. 14 in seitenansichtiger Alleindarstellung,

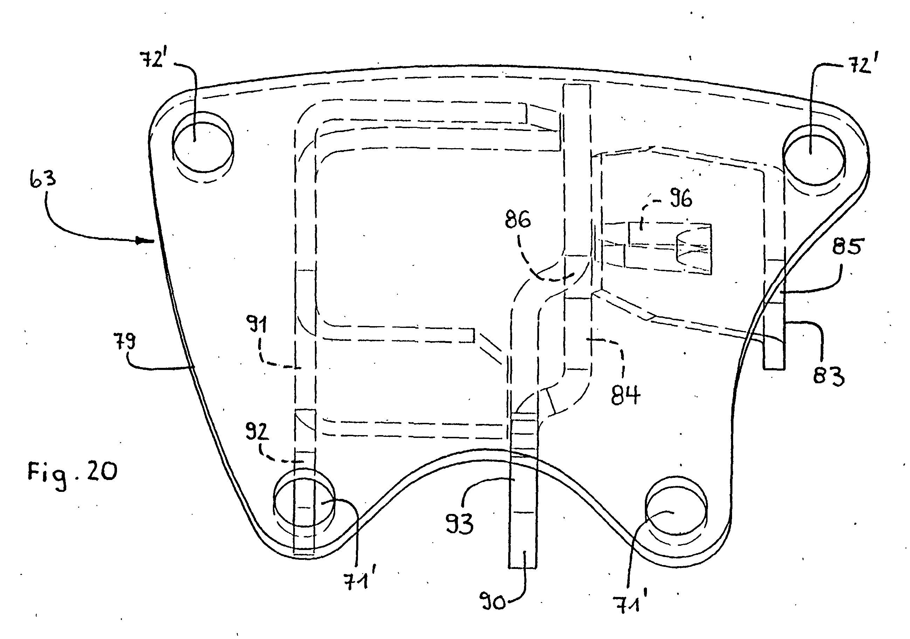

- Fig. 20: das untere Teil der Anschlußkonsole aus Fig. 14 in draufsichtiger Alleindarstellung,

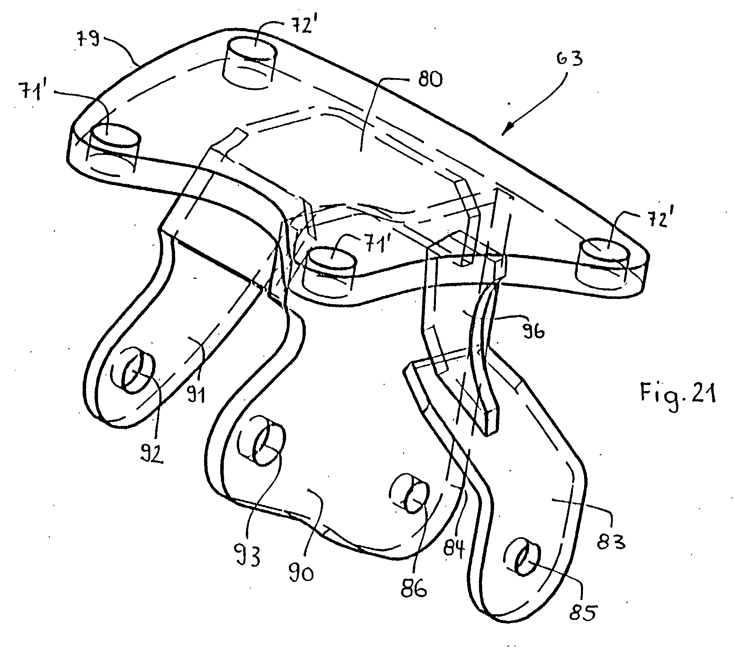

- Fig. 21: das untere Teil der Anschlußkonsole aus Fig. 14 in perspektivischer Ansicht von schräg vorne,
- Fig. 22: das Hauptteil eines hinteren Lagerbockes aus der Ausführungsform gemäß Fig. 2 bis 7 in Seitenansicht,
- Fig. 23: das Hauptteil eines hinteren Lagerbockes aus der Ausführungsform gemäß Fig. 2 bis 7 in Draufsicht,
- Fig. 24: das Hauptteil eines hinteren Lagerbockes aus der Ausführungsform gemäß Fig. 8 bis 10 in Seitenansicht,
- Fig. 25: das Hauptteil eines hinteren Lagerbockes aus der Ausführungsform gemäß Fig. 8 bis 10 in Draufsicht.

In den einzelnen Figuren sind gleiche beziehungsweise einander entsprechende Teile mit gleichem Bezugszeichen angezogen.

Von dem Lastkraftwagen sind als Teile von dessen Fahrgestell-Rahmen die beiden Rahmen-Längsträger mit 1 und 2 bezeichnet. Am vorderen Ende jedes derselben ist ein Multifunktionslagerschild 3, 4 befestigt. Diese vorderen Multifunktionslagerschilde 3, 4 dienen zur Aufnahme einer Vielzahl von Fahrzeugteilen, so auch solchen, die der vorderen Lagerung des Fahrerhauses 5 zuzurechnen sind.

Die vordere Fahrerhaus-Lagerung umfaßt folgende Bauteile, nämlich zwei Feder-Dämpfer-Beine 6, 7, eine von oben gesehen U-förmige Stabilisatorschwinge 8, zwei hintere Lagerböcke 9, 10, zwei Feder-Dämpfer-Bein-Halter 11, 12 und zwei vordere Anschlußkonsolen 13, 14. Die linksseitigen Bauteile der Fahrerhaus-Lagerung sind bezogen auf die Fahrzeuglängsachse spiegelsymmetrisch zu den rechtsseitigen Bauteilen ausgebildet und angeordnet.

Die U-förmige Stabilisatorschwinge 8 besteht aus einem rechten Längsarm 15, einem linken Längsarm 16, einer diese vorne miteinander verbindenden Querstange 17 und zwei, jeweils oberhalb des Übergangsbereiches zwischen Querstange 17 und einem Längsarm 15, 16 angeordneten Lageraugen 18, 19. In diese Lageraugen 18, 19 sind Lager 20, 21 eingebaut, deren Rotationsachsen in einer horizontalen Querlinie 22 zueinander fluchten. Außerdem ist am hinteren Ende jedes der beiden Längsarme 15, 16 der Stabilisatorschwinge 8 ebenfalls ein Lagerauge 23, 24 mit eingebautem Lager 25, 26 vorgesehen, deren Rotationsachsen ebenfalls in einer horizontalen Querlinie 27 zueinander fluchten, welche parallel zur Querlinie 22 verläuft.

Die U-förmige Stabilisatorschwinge 8 kann entweder als einstückiges Gesenkschmiede- oder Stahlgußteil realisiert oder alternativ hierzu aus drei vorgefertigten Einzelteilen zusammengesetzt sein. In letzterem Fall können die beiden Längsarme 15, 16 einschließlich aller Lageraugen und anderer Teile jeweils entweder durch ein Gesenkschmiede- oder Stahlgußteil und die Querstange 17 entweder durch ein Rohr oder ebenfalls ein vollmaterialiges Gesenkschmiedeteil gebildet sein. Nach entsprechender spanabhebender Nachbehandlung werden diese drei Teile dann miteinander verschweißt.

Die Längsarme 15, 16 der Stabilisatorschwinge 8 sind so geformt und angeordnet, daß sie bei einem Frontalcrashvorgang des Lastkraftwagen in Längsrichtung gezielt deformierbar sind und gleichzeitig eine energieabsorbierende Wirkung entfalten. Hierzu sind die Längsarme 15, 16 der Stabilisatorschwinge 8 zwischen vorderem und hinterem Ende - von der Seite betrachtet - leicht nach oben durchgebogen und - von oben betrachtet - ungerade, beispielsweise S-förmig oder Z-förmig ausgebildet, was bei einem Frontalcrashvorgang definiert verformbare Falt-, Biege- oder Knickzonen bedeutet. Vorzugsweise sind die beiden Längsarme 15, 16 innerhalb der U-förmigen Stabilisatorschwinge 8 gepfeilt zueinander in dem Sinne angeordnet daß deren hintere Enden 23, 24 weniger weit voneinander beabstandet sind als deren vordere Enden 18, 19.

Die U-förmige Stabilisatorschwinge 8 ist über die hinten an den Längsarmen 15, 16 angeordneten Lageraugen 23, 24 und die darin eingebauten Lager 25, 26 längs- und quergeführt sowie um die Rotationsachse - Linie 27 - schwenkbar an den beiden Lagerböcken 9, 10 angelenkt. Jeder derselben ist hinten oben an einem der beiden Multifunktionslagerschilde 3, 4 lösbar befestigt, und zwar an seinem unteren Endbereich 28 durch zwei Schraubverbindungen 29, 30, wovon die eine (29) ganz vorne und die andere (30) ganz hinten angeordnet ist. Außerdem weist jeder hintere Lagerbock 9, 10 oberhalb dieser Befestigungszone 28, aber unterhalb der Anschlußebene für die Stabilisatorschwinge 8 eine im Frontalcrashfall des Lastkraftwagen definiert verformbare Falt- oder Knickzone auf, die durch konstruktive Maßnahmen wie Querschnittsreduzierungen, Materialschwächungen, Einbuchtungen, Einschnürungen oder dergleichen realisiert sein kann.

Im dargestellten Beispiel ist jeder Lagerbock 9, 10 aus zwei Teilen zusammengesetzt, einem definiert verformbaren Hauptteil 31 und einem vorne an diesem angeflanscht mittels Verschraubungen 32 befestigten Anschlußteil 33, an dem ein Längsarm 15 bzw. 16 der Stabilisatorschwinge 8 über das hintenendig gegebene Lagerauge und das darin eingebaute Lager quergeführt sowie über eine querdurchgehende Lagerachse bzw. -schraube 40 längsgeführt und schwenkbar angelenkt ist.

Sowohl das Hauptteil 31 als auch das Anschlußteil 33 eines Lagerbockes 9, 10 ist vorzugsweise durch jeweils ein Blechbiegeteil realisiert.

Bei Ausführung als Blechbiegeteil ist das Anschlußteil 33 jedes Lagerbockes 9, 10 in Draufsicht gesehen U-förmig gebogen und weist im einzelnen hinten eine ebene Anschlußplatte 34 mit mehreren Schraubendurchführungslöchern 35 sowie beidseitig an der Anschlußplatte 34 senkrecht nach vorn und parallel zueinander angeordnet abgewinkelte Seitenwangen 36, 37 mit zueinander fluchtenden Bohrungen 38, 39 für Hindurchführung einer Lagerachse bzw. Lagerschraube 40 auf.

Das Hauptteil 31 eines Lagerbockes 9, 10 weist bei Ausführung als Blechbiegeteil eine ebene und leicht nach hinten geneigte vordere Anschlußplatte 41 mit mehreren Schraubendurchführungslöchem 42 für das vorderseitige Anflanschen und Befestigen des Anschlußteiles 33 mittels einer entsprechenden Anzahl von Schraubverbindungen 43 auf. An der vorderen Anschlußplatte 41 schließen sich beiderseits jeweils nach hinten abgewinkelte, parallel zueinander verlaufend angeordnete Seitenwangen 44, 45 an, in deren unterem Bereich Schraubendurchführungslöcher 46, 47 für die beiden Schraubverbindungen 29, 30 ausgebildet sind. Die zugehörigen Schraubendurchführungslöcher im jeweiligen Multifunktionslagerschild sind mit 46' und 47' bezeichnet.

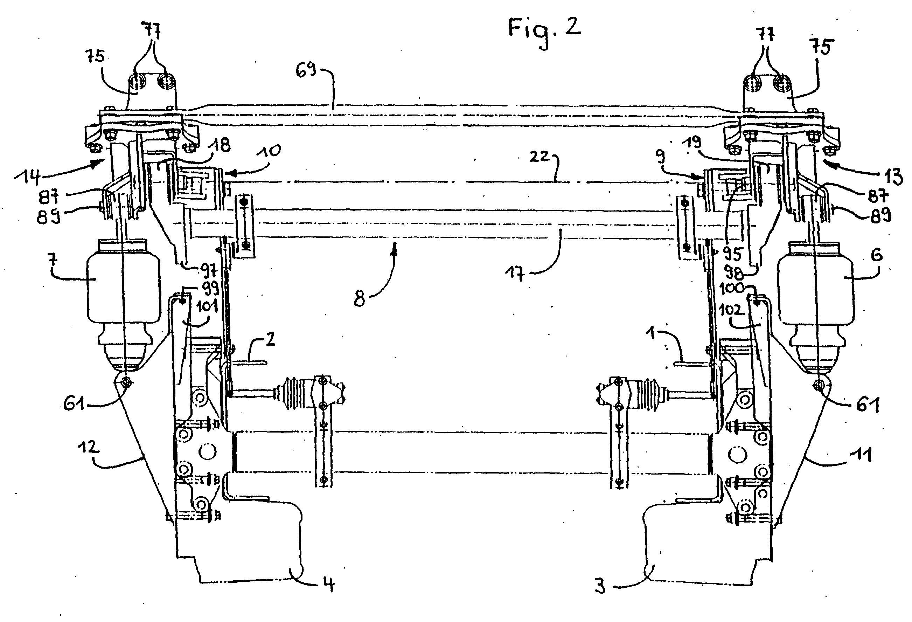

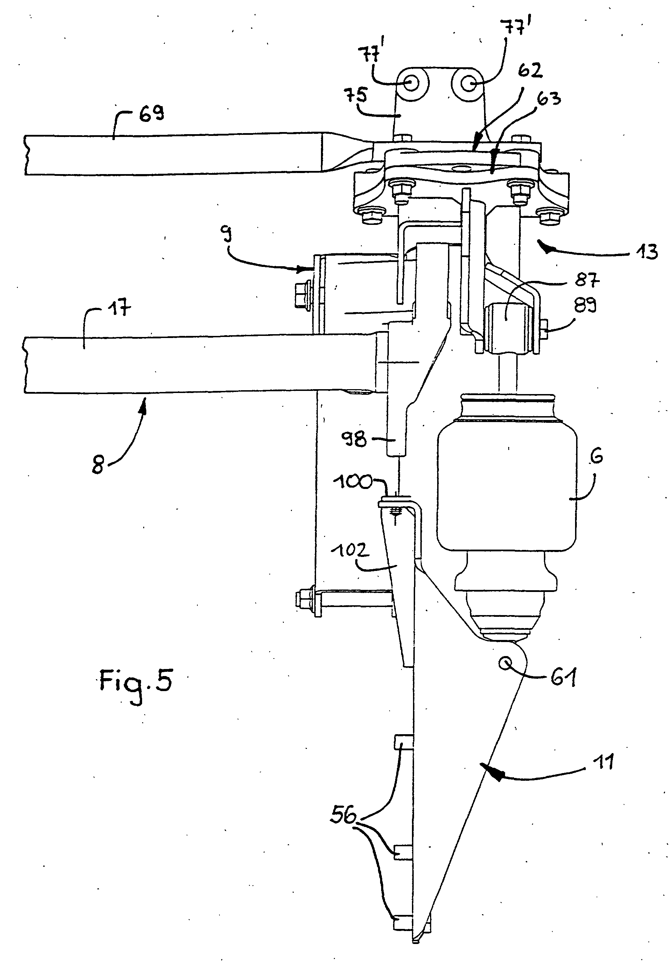

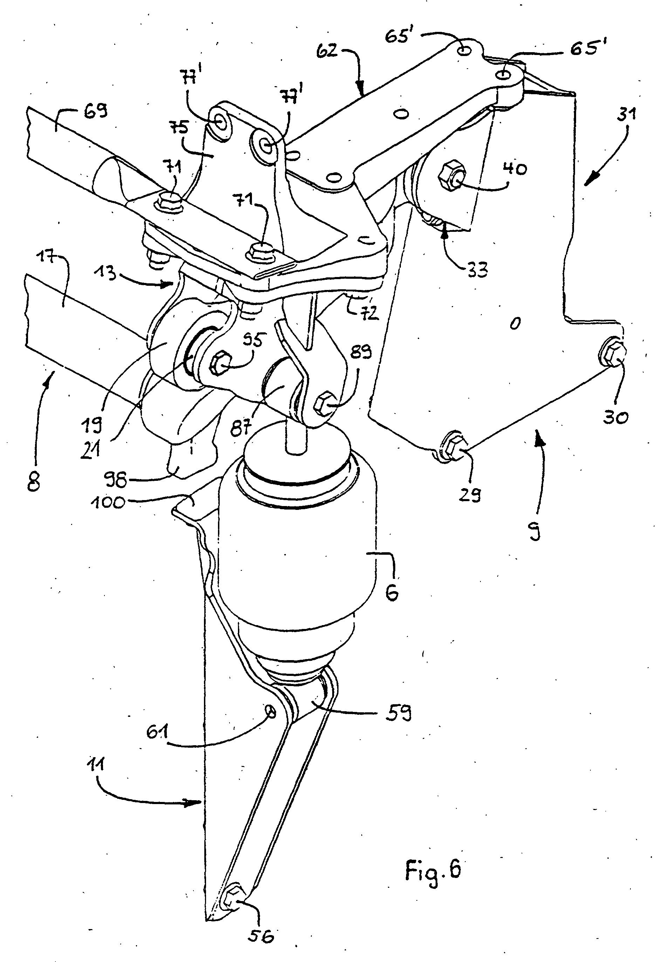

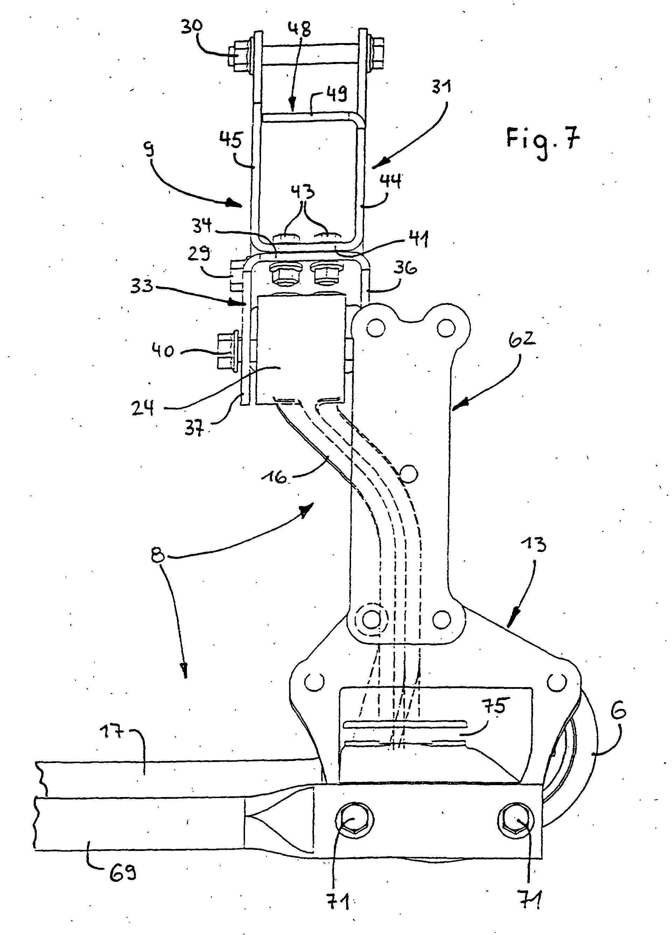

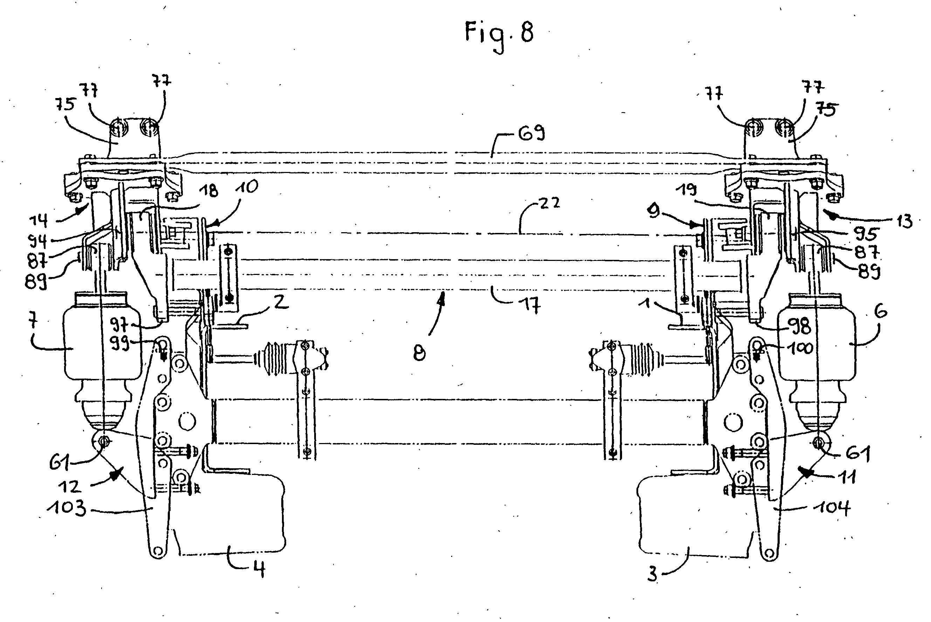

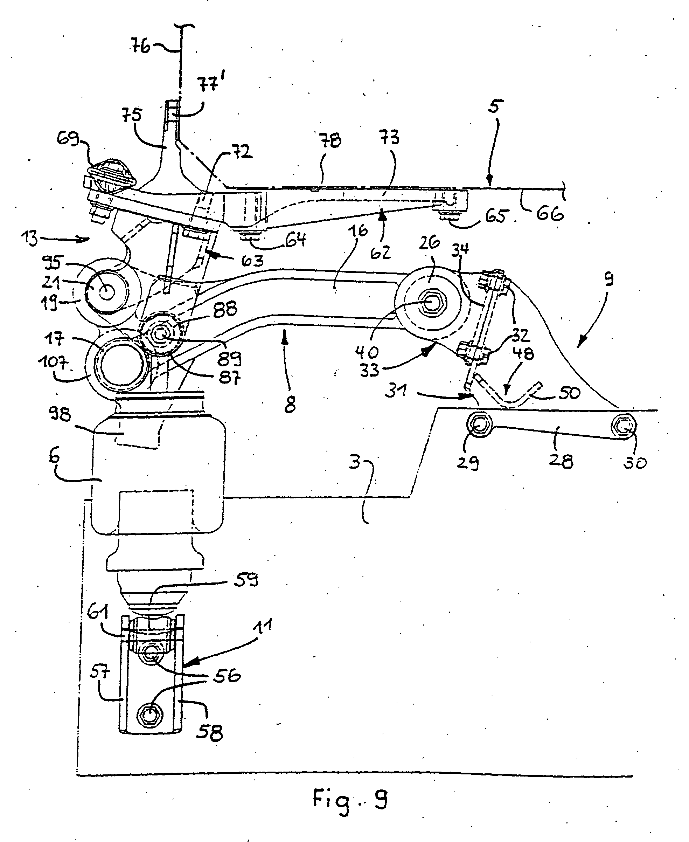

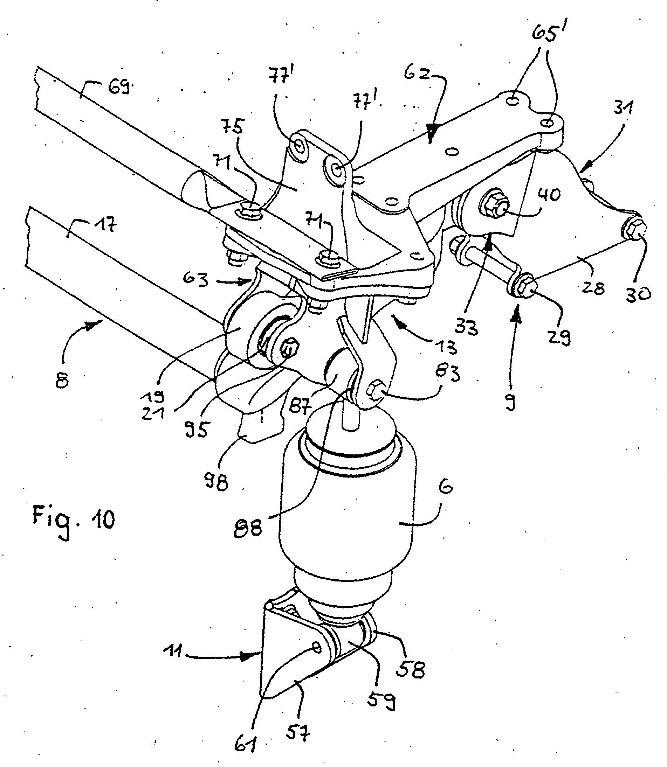

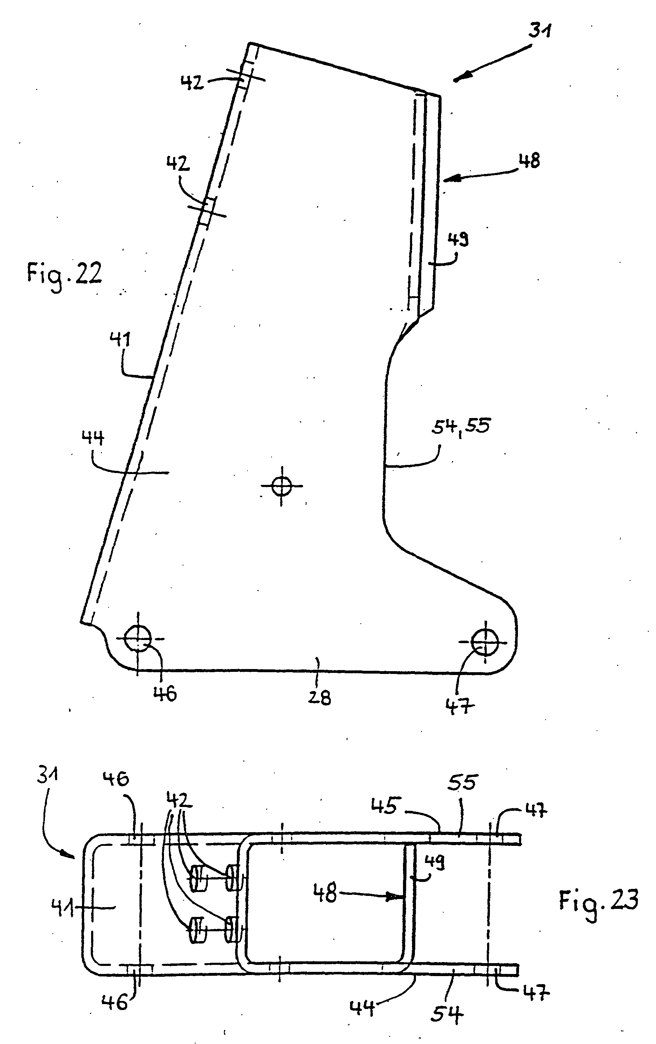

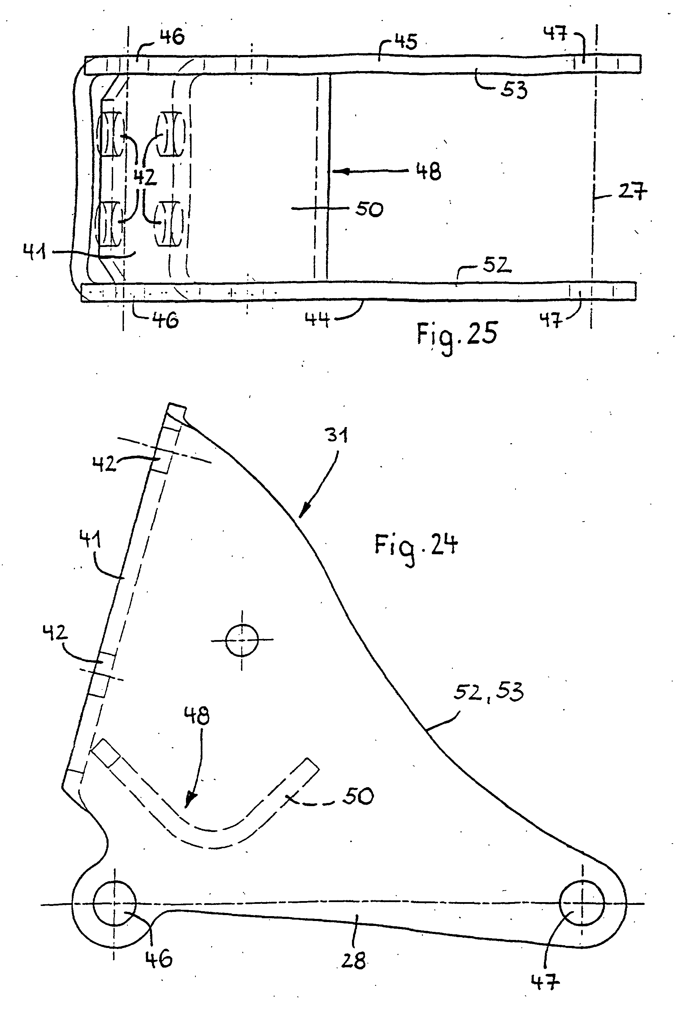

Darüber hinaus sind die beiden Seitenwangen 44, 45 des Hauptteils 31 eines Lagerbocks 9, 10 durch eine deren Abstand sicherstellende, nicht in der Deformationszone angeordnete Quertraverse 48 miteinander verbunden. Im Beispiel gemäß Figuren 2 bis 7 und 22, 23 ist die Quertraverse 48 durch eine hintenendig an einer Seitenwange 44 oder 45 zur gegenüberliegenden Seitenwange 45 bzw. 44 hin abgewinkelte und sich an dieser abstützend angeschweißten Querwange 49 gebildet. Im Beispiel gemäß den Figuren 8 bis 10 und 24, 25 ist die Quertraverse 48 dagegen im vorderen Bereich des Hauptteils 31 eines jeden Lagerbockes 9, 10, aber räumlich hinter der vorderen Schraubverbindung 29 angeordnet und beispielsweise durch ein Winkelprofilstück 50 (wie dargestellt), einen Bolzen oder ein Rohrstück realisiert, das zwischen den beiden Seitenwangen 44, 45 sich erstreckend mit diesen verschweißt ist. In diesem Fall dient die Quertraverse 50 als Anschlag, der im Frontalcrashfall des Lastkraftwagen bei Deformation des hinteren Lagerbockes 9, 10 rotatorisch um die vordere Schraubverbindung 29 auf der Oberseite 51 des den Lagerbock 9 bzw. 10 aufnehmenden Multifunktionslagerschildes 3 bzw. 4 wegbegrenzend zur Anlage kommt.

Es besteht außerdem die Möglichkeit, den Abstand der vorderen Schraubendurchführungslöcher 46 zur Peripherie des Lagerbockes 9, 10 so zu bemessen und/oder die vordere Schraubverbindung 29, mit der ein Lagerbock 9 bzw. 10 am Multifunktionslagerschild 3 bzw. 4 befestigt ist, auf eine solche Grenzbelastung auszulegen, daß dann, wenn im Frontalcrashfall der während der Deformation mit seiner anschlagbildenden Quertraverse 50 an der Multifunktionslagerschild-Oberseite 51 zur Anlage gekommene und maximal bzw. weitestgehend deformierte Lagerbock 9 bzw. 10 weiterhin einer nach hinten gerichteten Horizontalkraft ausgesetzt ist, die vordere Verbindung sich auflöst, dabei der Lagerbock 9, 10 zur Peripherie hin ausreißt und/oder die vordere Schraubverbindung 29 abreißt und der Lagerbock 9 bzw. 10 sich dann rotatorisch um die hintere Schraubverbindung 30 nach hinten bis zum kompletten Überschlag verschwenken kann.

Die Verformung des Lagerbockes 9 bzw. 10 im Frontalcrashfall wird - wie bereits weiter vorne angedeutet - durch konstruktive Maßnahmen bewirkt. Im Beispiel gemäß Figuren 8 bis 10 und 24, 25 weist hierzu der Lagerbock 9 bzw. 10 auf der Rückseite seines Hauptteil 31 hintere Einbuchtungen 52, 53 an seinen Seitenwangen 44, 45 auf. Im Beispiel gemäß Figuren 2 bis 7 und 22, 23 weist der Lagerbock 9, 10 auf der Rückseite seines Hauptteils 31 unterhalb der Querwange 49 an seinen Seitenwangen 44, 45 hintere Einbuchtungen 54, 55 auf. Im Bereich der den Querschnitt in Längsrichtung gesehen reduzierenden Einbuchtungen 52, 53 bzw. 54, 55 knickt der Lagerbock 9, 10 im Frontalcrashfall bei von vorn wirkender Kraft, die oben über die Stabilisatorschwinge 8 her eingeleitet wird, ein.

Das Fahrerhaus 5 ist mit seinem Boden 66 vorne auf den beiden Anschlußkonsolen 13, 14 befestigt, mit diesen an den beiden Feder-Dämpfer-Beinen 6, 7 angelenkt und über diese gegenüber dem Fahrgestell-Rahmen 1, 2 abgefedert. Für die Abstützung der Feder-Dämpfer-Beine 6, 7 am Fahrgestell-Rahmen sind die beiden Feder-Dämpfer-Bein-Halter 11, 12 vorgesehen. Jeder derselben ist seitlich außen in gleicher Höhenlage an einem Multifunktionslagerschild 3 bzw. 4 lösbar mittels Schraubenlöcher 56' durchsetzender Schraubverbindungen 56 befestigt und nimmt zwischen zwei Seitenwangen 57, 58 quergeführt sowie schwenkbar das am unteren Ende eines Feder-Dämpfer-Beines 6 bzw. 7 angeordnete Lagerauge 59 mit eingebauten Lager 60 auf. Eine in Fahrzeuglängsrichtung quer durchgehende Lagerachse 61 stellt die Verbindung zwischen Lager 60 und Feder-Dämpfer-Bein-Halter 11 bzw. 12 her und bildet die Schwenkachse für das solchermaßen angelenkte Feder-Dämpfer-Bein 6 bzw. 7. Das obere Ende eines jeden Feder-Dämpfer-Beines 6, 7 ist in einer Anschlußkonsole 13 bzw. 14 gefaßt.

Jede der beiden Anschlußkonsolen 13, 14 ist aus zwei Teilen zusammengesetzt, nämlich einem oberen Tragteil 62, auf dem das Fahrerhaus 5 befestigt ist, und einem unteren Lagerteil 63, an dem ein Feder-Dämpfer-Bein 6 bzw. 7 und an anderer Stelle die Stabilisatorschwinge 8 mit einem der beiden an ihr angeordneten Lageraugen 18, 19 mit eingebauten Lagern 20, 21 angelenkt sind.

Das obere Tragteil 62 jeder Anschlußkonsole 13, 14 ist durch eine großflächige Platte gebildet, die mit ihrem hinteren Abschnitt 73 über mehrere Vertikalverschraubungen 64, 65 am Fahrerhaus-Boden 66 befestigt ist und mit einem vorderen Abschnitt 74 den Fahrerhaus-Boden 66 vorne um ein gewisses Maß überragt und eine schräge Stützrampe 67 bildet. An der freien Oberseite 68 der Stützrampe 67 bzw. des vorderen Abschnitts 74 ist eine die Lage der beiden Anschlußkonsolen 13, 14 stabilisierende Querstange 69 und an der schräg nach vorn oben ansteigenden Unterseite 70 der Stützrampe 67 ist ein Lagerteil 63 einer Anschlußkonsole 13, 14 jeweils mittels mehrerer vorderer und hinterer Vertikalverschraubungen 71, 72 befestigbar.

Die Oberseite eines jeden Anschlußkonsolen-Tragteils 62 ist im hinteren Abschnitt 73 eben ausgebildet und im vorderen Abschnitt 74 schräg nach oben hochgezogen, an dessen vorderstem Abschnitt 68 die Querstange 69 aufgelagert und befestigt ist. Die Dicke der Tragteil-Platte nimmt von hinten beginnend bis etwa zur Mitte ihrer Längserstreckung keilförmig bis zu einem Höchstmaß zu und dann von dieser dicksten Querschnittsstelle bis zum vorderen Ende wieder auf ein bestimmtes Maß ab, wobei dieser zuletzt genannte Bereich die Stützrampe 67 bildet.

Das Tragteil 62 jeder Anschlußkonsole 13, 14 weist am Übergang zwischen ebenem Plattenbereich und schrägen Stützrampenbereich einen nach oben abragenden Befestigungsflansch 75 auf, an dem der Fahrerhaus-Boden 66 mit einer hochgezogenen Vorderkante 76 auf Anschlag angeschlossen und mittels mehrerer Horizontalverschraubungen 77 befestigt ist. Die zugehörigen Schraubenlöcher sind mit 77' bezeichnet. Der sich nach hinten anschließende Fahrerhaus-Boden-Bereich 78 ist auf der ebenen Oberseite des hinteren Abschnitts 73 des Anschlußkonsolen-Tragteils 62 aufgelagert und dort mittels der Vertikalverschraubungen 64, 65 festgespannt, wobei die vorderen Vertikalverschraubungen 64 im Bereich der größten Plattendicke und die Vertikalverschraubungen 65 am hinteren Platten-Endbereich angeordnet sind. Die zugehörigen Schraubenlöcher sind mit 64' bzw. 65' bezeichnet.

Das Lagerteil 63 jeder Anschlußkonsole 13, 14 weist oben eine Stirnplatte 79 mit ebener Oberseite 80 auf, mit der es an der ebenen Unterseite 70 der Stützrampe 67 eines Anschlußkonsolen-Tragteils 62 angeflanscht und dort mittels der Vertikalverschraubungen 71, 72 festgespannt ist. Die zugehörigen Schraubenlöcher in den Platten 67 und 79 sind mit 71' bzw. 72' bezeichnet.

Die vorderen Vertikalverschraubungen 71, mit denen das Lagerteil 63 jeder Anschlußkonsole 13, 14 mit seiner Stirnplatte 79 an der Stützrampe 67 eines Anschlußkonsolen-Tragteils 62 festgespannt ist, werden vorzugsweise auch zur Befestigung der Querstange 69 vorne am Tragteil-Oberseitenabschnitt 74 herangezogen.

Das Lagerteil 63 jeder Anschlußkonsole 13, 14 weist außer der Stirnplatte 79 ein von dieser nach unten beabstandetes erstes äußeres Maul 81 sowie ein zweites, weiter oben, aber ebenfalls von der Stirnplatte 79 nach unten beabstandetes inneres Maul 82 auf. Das äußere Maul 81 ist seitlich von Wänden 83, 84 mit diese durchsetzenden, horizontal quer fluchtenden Bohrungen 85, 86 begrenzt und dient zur seitengeführten Aufnahme sowie Lagerung des aus einem Lagerauge 87 mit eingebauten Lager 88 bestehenden oberen Endes eines Feder-Dämpfer-Beines 6 bzw. 7 mittels einer querdurchgehenden Lagerachse 89 am Lagerteil 63 einer Anschlußkonsole 13, 14. Das innere Maul 82 in jedem Anschlußkonsolen-Lagerteil 63 ist ebenfalls seitlich durch Wände 90, 91 mit diese durchsetzenden, horizontal quer fluchtenden Bohrungen 92, 93 begrenzt und dient zur seitengeführten Aufnahme und Lagerung eines an der Stabilisatorschwinge 8 angeordneten Lagerauges 18 bzw. 19 samt darin eingebautem Lager 20 bzw. 21 mittels einer querdurchgehenden Lagerachse 94 bzw. 95 am Lagerteil 63 einer Anschlußkonsole 13, 14.

Im dargestellten Beispiel sind die innere Begrenzungswand 84 des ersten äußeren Maules 81 und die äußere Begrenzungswand 90 des zweiten inneren Maules 82 durch eine einzige gemeinsame Zwischenwand gebildet. Alle maulbegrenzenden Wände 83, 84, 90, 91 sind an der Unterseite der oberen Stirnplatte 79 abgestützt angeschlossen.

Das untere Lagerteil 63 jeder Anschlußkonsole 13, 14 kann entweder durch ein Stahlgußteil oder durch eine Schweißkonstruktion aus mehreren miteinander verschweißten Stahlblechen realisiert sein. In letzterem Fall ist die äußere Begrenzungswand 83 des äußeren Mauls 81 zur inneren Begrenzungswand 84 hin gebogen, dort angeschweißt und außerdem durch eine Vertikalrippe 96 zur Stirnplatte 79 hin abgestützt.

Das obere Tragteil 62 jeder Anschlußkonsole 13, 14 ist vorzugsweise durch ein Sphärogußteil realisiert.

Die vorderen Vertikalverschraubungen 71, mit denen das Lagerteil 63 jeder Anschlußkonsole 13, 14 mit seiner oberen Stirnplatte 79 an der Stützrampe 67 eines Anschlußkonsolen-Tragteils 62 festgespannt ist, sind vorzugsweise auf eine solche Grenzbelastung ausgelegt, daß dann, wenn im Frontalcrashfall des Lastkraftwagens verschiedene Deformationszonen in den Fahrerhaus-Lagerorganen 9, 10, 15, 16 bis an ihre vorgegebenen Grenzen verformt sind, die besagten vorderen Vertikalverschraubungen 71 abreißen, die benachbarten hinteren Vertikalverschraubungen 72 aber nur gedehnt werden und jedes Anschlußkonsolen-Lagerteil 63 sich dann rotatorisch um diese hinteren Vertikalverschraubungen 72 bewegen kann, wodurch sich ein Axialversatz der von der Stirnplatte 63 nach unten beabstandeten Feder-Dämpfer-Bein- und Stabilisatorschwinge-Anlenkstellen 81, 82 nach hinten ergibt.

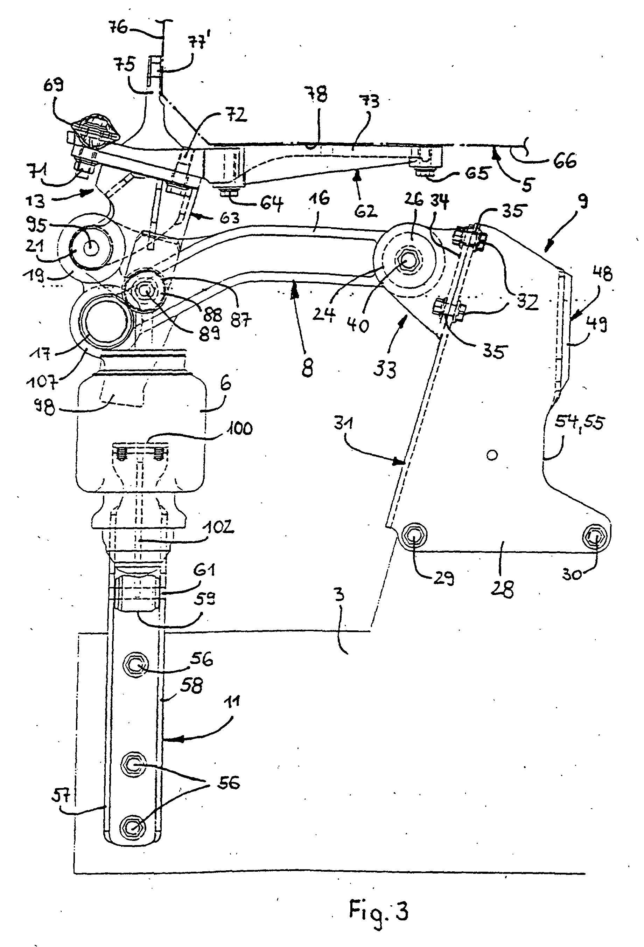

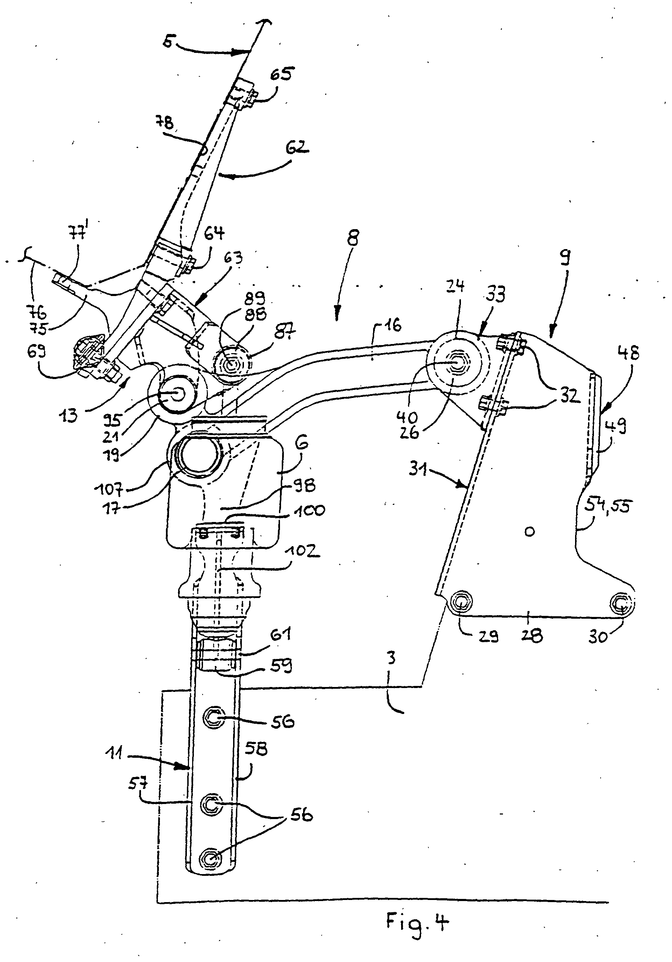

Die vordere Fahrerhaus-Lagerung verfügt auch über eine das Einfedern des Fahrerhauses beim Kippen begrenzende Einrichtung. Diese besteht aus zwei gleichlangen Anschlagfüßen 97, 98, von denen jeder unten abragend am vorderen Ende jeweils eines Längsarmes 15, 16 der U-förmigen Stabilisatorschwinge 8 angeordnet ist, und zwei zugehörigen rahmenfest angeordneten Anschlägen 99, 100. Im Fall des Ausführungsbeispiels gemäß Fig. 2 bis 7 ist der Anschlag 99 bzw. 100 durch eine austauschbare Anschlagplatte gebildet, die an einem hochgezogenen, durch einen Quersteg gebildeten oberen Ende eines Feder-Dämpfer-Bein-Halters 11 bzw. 12 gegebenenfalls elastisch nachgiebig oder abgefedert befestigt ist, wobei der die Anschlagplatte tragende Halter-Quersteg und die hochgeführte Halter-Wand durch eine mit ihnen verschweißte Versteifungsrippe 101 bzw. 102 unterstützt sind. Fig. 3 zeigt das Fahrerhaus in ungekippter Position und dabei die Anschlagfüße 97, 98 in einem solchen Abstand von den zugehörigen Anschlägen 99 bzw. 100, daß das normale Einfedern des Fahrerhauses 5 während der Fahrt nicht behindert wird. Fig. 4 dagegen zeigt das Fahrerhaus 5 in maximal gekippter Stellung, in der die Anschlagfüße 97 bzw. 98 auf den Anschlägen 99 bzw. 100 aufsitzen und so das weitere Einfedern der Feder-Dämpfer-Beine 6, 7 behindern. Während dieses Fahrerhaus-Kippvorganges beschreiben die Anschlagfüße 97, 98 eine rotatorische Bewegung um die Rotationsachse 27, die durch die hinterendigen Lager-Verschraubungen 40 der U-förmigen Stabilisatorschwinge 8 mit den Lagerböcken 9, 10 geht.

Im Fall des Ausführungsbeispiels gemäß Fig. 8 bis 10 ist der Anschlag 99, 100 nicht am Feder-Dämpfer-Bein-Halter 11 bzw. 12, sondern an einem eigenen Halter 103 bzw. 104 angeordnet, der wiederum an einem der beiden Multifunktionslagerschilde 3 bzw. 4 befestigt ist und im übrigen noch anderen, hier nicht interessierenden Zwecken dient. Die Lage, Ausbildung und Befestigungsart der Anschlagplatten sind gleich wie im vorgeschilderten Fall.

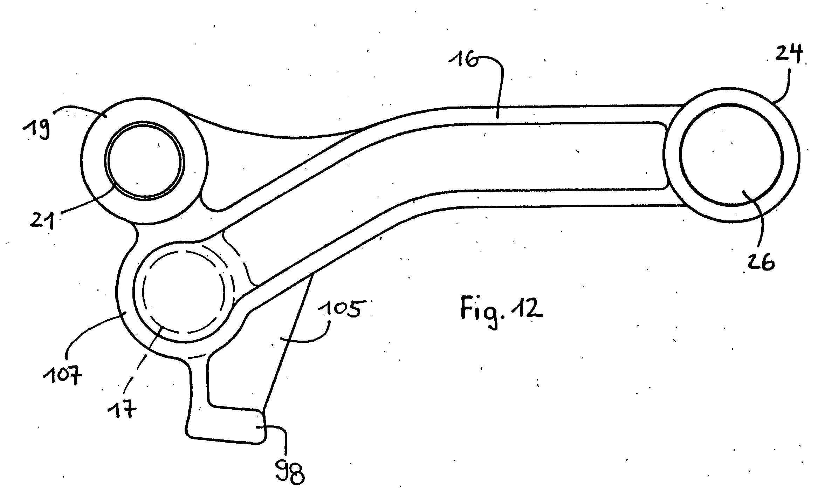

Die Anschlagfüße 97, 98 sind vorzugsweise jeweils einstückig mit den Längsarmen 15, 16 der U-förmigen Stabilisatorschwinge 8 ausgebildet und rückseitig - wie aus Fig. 12 ersichtlich - durch eine Strebe 105 zum jeweiligen Längsarm 15 bzw. 16 hin versteift. Der jeweilige Anschlagfuß 97 bzw. 98 geht dabei unten an einem längsarm-vorderendigen Aufnahmeauge 106, 107 ab, in dessen innenseitige Sackbohrung das zugehörige Ende der Querstange 17 form- und gegebenenfalls auch kraftschlüssig eingesetzt und anschließend angeschweißt ist.

Die vorbeschriebene erfindungsgemäße Bauweise der vorderen Fahrerhaus-Lagerung hat eine Reihe von Vorteilen, auf die nachfolgend eingegangen ist.

Sie ist komfortabel, kostengünstig, montagefreundlich, verspannungsfrei und crashoptimiert.

Der Komfort wird durch große Federwege erreicht. Da das hintere Lager der Stabilisatorschwinge rahmenseitig in einem "ruhigen" Bereich des Fahrgestellrahmens angeordnet ist, ergibt sich auch eine Querschüttelverbesserung. Die Trennung der Komfortlager vom Drehlager für Kippen gewährleistet eine optimale Auslegung.

Die Kostensenkung wird dadurch erzielt, daß gegenüber bisherigen Fahrerhaus-Lagerungen verschiedene Teile entfallen.

Die Verbesserung der Montagefreundlichkeit ergibt sich dadurch, daß eine sehr gute Zugangsmöglichkeit zur Verbindungsstelle Fahrerhaus-Fahrgestellrahmen beim Fahrerhausaufsetzen gegeben ist.

Die Verspannungsfreiheit wird dadurch erzielt, daß Ausgleichsmöglichkeiten zwischen Stabilisatorschwinge und Fahrgestellrahmen einerseits sowie Fahrerhaus andererseits gegeben sind.

Die Crashoptimierung erfolgt durch energieverzehrende Ausgestaltung und/oder Anordnung verschiedener Lagerteile. Hierzu nachfolgend einige Anmerkungen.

Die hinteren Lagerböcke 9, 10 erfahren im Crashfall ab einem bestimmten Beanspruchungsniveau an den vorgesehenen Stellen örtlich starke Verformungen, wodurch eine Verlagerung der hinteren Stabilisatorschwingen-Lagerstellen nach hinten und unten erfolgt. Je nach Größe der von vorne auf das Fahrerhaus einwirkenden Kraft kann dann sogar ein Überschlagen der Stabilisatorschwinge 8 nach hinten erfolgen. Aufgrund dieses durch gezielte Bauteilauslegung bewirkten Effekts läßt sich im Crasfall eine größtmögliche Verschiebung des Fahrerhauses nach hinten gegenüber dem Fahrgestell erzielen als Kombination aus der Bogenbewegung der Stabilisatorschwingenlagerpunkte um eine tiefliegende Drehachse und der doppelten Stabilisatorschwingenarmlänge aus der Stabilisatorschwingen-Überschlagbewegung. Dabei bleibt während dieses gesamten Bewegungsablaufes eine feste Verbindung zwischen Fahrerhaus und Fahrgestell erhalten.

Bei der Version gemäß Fig. 2 bis 7, 22, 23 bauen die hinteren Lagerböcke 9, 10 relativ hoch, wobei deren Höhe z. B. das Doppelte der Länge im Bereich der unteren Anschlußzone 28 beträgt. Dieses begünstigt wegen der im Bereich des oberen Endes jedes Lagerbockes 9, 10 liegenden Anschlußstelle 40 der Stabilisatorschwinge 8 die Verformung der Lagerböcke 9, 10 in den konstruktiv vorgegebenen Bereichen.

Bei der Version gemäß Fig. 8 bis 10, 24, 25 bauen die hinteren Lagerböcke 9, 10 nicht so hoch, ihre Höhe entspricht hier z. B. der Lagerbock-Länge im Anschlußbereich 28. Dies hat zur Folge, daß hier im Crashfall ein kürzerer Hebelarm wirksam ist. Die Verformung ist daher bei diesen niedrigeren Lagerböcken 9, 10 nicht so stark wie bei jenen der anderen Version. Dafür ist hier ein Abriß der Lagerböcke 9, 10 im Bereich der vorderen Verschraubungen 29 vorgesehen, wobei dieser Abriß durch den Anschlag 48 und den hierdurch gegebenen Hebelarm zwischen dessen Anschlagstelle am Multifunktionslagerschild 3, 4 und der vorderen Verschraubung 29 unterstützt wird. Es erfolgt dann nach ihrem Abriß im Bereich der vorderen Schraubverbindung 29 ein rotatorischer Überschlag der Lagerböcke 9, 10 um die hinteren Schraubverbindungen 30 nach hinten sowie - je nach Stärke der Krafteinwirkung von vorne - auch hier ein Überschlag der Stabilisatorschwinge 8 mit einem entsprechenden Axialversatz des Fahrerhauses nach hinten. Auch hierbei bleibt während des gesamten besagten Bewegungsablaufes die Verbindung zwischen Fahrerhaus und Fahrgestell erhalten.

Da diese Funktion und Verhaltensweisen durch Crashversuche mit gebauten Lastkraftwagen-Prototypen bewiesen wurden, ergibt sich ein bisher noch nicht in der Praxis dargestellter Sicherheitsstandard im Bereich Fahrerhaus und Insassensicherheit.

## Patentansprüche

1. Vordere Lagerung des kippbaren Fahrerhauses eines Lastkraftwagens, bei der das Fahrerhaus (5) vorne auf zwei Anschlusskonsolen (13, 14) befestigt und über eine aus zwei Längsarmen (15, 16) und einer Querstange (17) gebildete U-förmige Stabilisatorschwinge (8) am Fahrgestell-Rahmen (1, 2), dort an Lagerböcken (9, 10) angelenkt sowie gegenüber dem Fahrgestell-Rahmen (1, 2) durch zwei unten an jeweils einem Feder-Dämpfer-Bein-Halter (11, 12) angelenkte Feder-Dämpfer-Beine (6, 7) abgefedert ist, **dadurch gekennzeichnet, dass** jedes Feder-Dämpfer-Bein (6, 7) oben direkt an einer Anschlusskonsole (13, 14) angelenkt ist, daß die U-förmige Stabilisatorschwinge (8) einstückig oder aus miteinander verschweißten Teilen ausgeblldet ist und vorne jeweils am Übergangsbereich zwischen Querstange (17) und einem Längsarm (15, 16) ein nach oben abragendes Lagerauge (18, 19) mit eingebautem Lager (20, 21) für einen quergeführten und kippbaren Anschluss an jeweils einer Anschlusskonsole (13, 14) aufweist.

2. Vordere Fahrerhaus-Lagerung nach Anspruch 1, **dadurch gekennzeichnet, daß** als tragende Organe zwei Multifunktionslagerschilde (3, 4) vorgesehen sind, von denen jeder am vorderen Ende eines Rahmen-Längsträgers (1, 2) des Fahrgestells befestigt ist, und daß an jedem Multifunktionslagerschild (3, 4) vorn seitlich außen ein Feder-Dämpfer-Bein-Halter (11, 12) und hinten oben ein die Stabilisatorschwinge (8) lagernder Lagerbock (9, 10) lösbar befestigt sind.

3. Vordere Fahrerhaus-Lagerung nach Anspruch 1, **dadurch gekennzeichnet, daß** das Fahrerhaus (5) über die Anschlußkonsolen (13, 14) quergeführt und kippbar am vorderen Ende der Stabilisatorschwinge (8) angelenkt ist, über die in deren Lageraugen (18, 19) eingebauten Lager (20, 21) und über in einer Horizontallinie (22) zueinander fluchtend in den Anschlußkonsolen (13, 14) gefaßten Lagerachsen (94, 95).

4. Vordere Fahrerhaus-Lagerung nach Anspruch 1, **dadurch gekennzeichnet, daß** die Stabilisatorschwinge (8) entweder durch ein einstückiges Gesenkschmiede- oder Stahlgußteil realisiert oder aus drei vorgefertigten Einzelteilen zusammengesetzt ist, wobei in letzterem Fall die beiden Längsarme (15, 16) einschließlich aller Lageraugen und sonstigen Teile komplett jeweils durch ein Gesenkschmiede- oder Stahlgußteil und die Querstange (17) entweder durch ein Rohr oder ebenfalls ein vollmaterialiges Gesenkschmiedeteil gebildet ist und diese drei Teile miteinander verschweißt sind.

5. Vordere Fahrerhaus-Lagerung nach einem der Ansprüche 1 und 4, **dadurch gekennzeichnet, daß** die Längsarme (15, 16) der U-förmigen Stabilisatorschwinge (8) so geformt sind, daß sie bei einem Frontalcrashvorgang in Längsrichtung gezielt deformierbar sind, insofern eine energieabsorbierende Wirkung haben.

6. Vordere Fahrerhaus-Lagerung nach Anspruch 5, **dadurch gekennzeichnet, daß** die Längsarme (15, 16) der U-förmigen Stabilisatorschwinge (8) zwischen vorderem und hinterem Ende - von der Seite betrachtet - leicht nach oben durchgebogen und - von oben betrachtet - ungerade z. B. S- oder Z-förmig ausgebildet sind und insofern bei einem Frontalcrashvorgang definiert verformbare Falt-, Biege- oder Knickzonen aufweisen.

7. Vordere Fahrerhaus-Lagerung nach einem der Ansprüche 4 bis 6, **dadurch gekennzeichnet, daß** die beiden Längsarme (15, 16) innerhalb der U-förmigen Stabilisatorschwinge (8) gepfeilt zueinander in dem Sinne geordnet sind, daß deren hintere Enden weniger weit voneinander beabstandet sind als deren vordere Enden.

## Claims

1. Front mounts of a tiltable cab of a truck, in which mounts the cab (5) is mounted at the front on two connection consoles (13, 14), is indirectly located on the chassis frame (1, 2) and is sprung relative to said chassis frame (1, 2) by means of two spring damper struts (6, 7), **characterised in that** each spring damper strut (6, 7) is located on a connection console (13, 14) and that consequently the cab (5) is sprung relative to the chassis frame (1, 2) via the connection consoles (13, 14) and the spring damper struts (6, 7) supported on said consoles (13, 14), that, in addition, the cab (5) is guided in transverse direction and, for tilting operations, slewably located on a U-shaped swinging-arm stabiliser (8) via the connection consoles (13, 14), which U-shaped swinging-arm stabiliser (8) is designed as a single piece and
● is, in the area of its rear ends, located on bearing blocks (9, 10) firmly mounted on the chassis frame,
● consists of two longitudinal arms (15, 16) whose front ends are firmly interconnected by means of a cross-member (17), with bearings (25, 26) installed in their rear-end bearing eyes (23, 24) and
● is, in each transition area between the cross-member (17) and a longitudinal arm (15, 16), provided with an upward-pointing bearing eye (18, 19) with an installed bearing (20, 21) for a transverse-guided and tilting connection to the respective connection console (13, 14).

2. Front cab mounting system according to Claim 1, **characterised in that** two multi-functional end plates (3, 4) are provided as bearing organs, each of which plates (3, 4) is fastened to the front end of a frame longitudinal member (1, 2) of the chassis and that on each of the multi-functional end plates (3, 4) at the front on the outboard side one spring-and-damper strut support (11, 12) and on top at the rear a mount (9, 10) for mounting the swinging-arm stabiliser (8) are secured by removable fasteners.

3. Front cab mounting system according to Claim 1, **characterised in that** the cab (5) is guided in transverse direction and is tiltably located on the front end of the swinging-arm stabiliser (8) via the connection consoles (13, 14), via the bearings (20, 21) which are installed in the bearing eyes (18, 19) of said swinging-arm stabiliser (8) and via bearing shafts (94, 95) which are aligned with each other in a horizontal plane (22) and are located in the connection consoles (13, 14).

4. Front cab mounting system according to Claim 1, **characterised in that** the swinging-arm stabiliser (8) is either provided in the form of a single-piece drop-forged or cast steel part or composed of three prefabricated single parts, whereby in the latter case the two longitudinal arms (15, 16) including all bearing eyes and other parts are provided complete as drop-forged or cast steel parts and the cross-member (17) is provided either as a tube or also as a solid drop-forged part and that these three parts are interconnected by welding.

5. Front cab mounting system according to the Claims 1 to 4, **characterised in that** the longitudinal arms (15, 16) of the U-shaped swinging-arm stabiliser (8) are designed in such a way that in the event of a head-on collision they can be purposefully deformed in longitudinal direction, as they have an energy-absorbing effect in this respect.

6. Front cab mounting system according to Claim 5, **characterised in that** between their front and rear ends the longitudinal arms (15, 16) of the U-shaped swinging-arm stabiliser (8) have - if viewed from the side - a slightly upward curved design and - if viewed from the top - an S- or Z-shaped design and, in this respect, are provided with folding, bending and buckling zones which can be purposefully deformed in the event of a head-on collision.

7. Front cab mounting system according to the Claims 4 to 6, **characterised in that** the two longitudinal arms (15, 16) within the U-shaped swinging-arm stabiliser (8) are, relative to each other, arranged in the form of an arrow in the sense that their rear ends are less far apart from each other than their front ends.

## Revendications

1. Suspension avant de cabine basculante d'un camion poids lourd sur lequel la cabine (5) est fixée à l'avant sur deux consoles d'assemblage (13, 14) et est articulée indirectement sur le cadre du châssis (1, 2) et, vis-à-vis de ce dernier, est amortie par l'intermédiaire de deux amortisseurs à jambe de suspension (6, 7), **caractérisée par le fait que** chaque amortisseur à jambe de suspension (6, 7) est articulé sur une console d'assemblage (13, 14) et, ainsi, la cabine (5) est amortie par les consoles d'assemblage (13, 14) et des amortisseurs à jambe de suspension (6, 7) s'appuyant dessus vis-à-vis du cadre du châssis (1, 2), **par le fait que** la cabine (5) est de plus guidée transversalement sur un bras oscillant stabilisateur en forme de U (8) par l'intermédiaire des consoles d'assemblage (13, 14) ainsi qu'articulée de manière à pivoter pour permettre son basculement, auquel cas ce bras oscillant stabilisateur en forme de U (8) est composé d'un seul élément et
- est articulé au niveau de ses extrémités arrière sur des supports de palier (9, 10) disposés de manière fixe sur le cadre du châssis,
- se compose de deux bras longitudinaux (15, 16) reliés l'un à l'autre de manière fixe par une barre transversale (17) avec des paliers (25, 26) montés dans des orifices de palier (23, 24) à leurs extrémités arrière, et
- présente à l'avant de chaque côté au niveau de la zone de transition entre la barre transversale (17) et un bras longitudinal (15, 16) un orifice de palier (18, 19) dépassant vers le haut avec un palier (20, 21) monté pour un raccordement guidé transversalement et basculable au niveau de chacune des consoles d'assemblage (13, 14).

2. Suspension avant de cabine selon la revendication 1, **caractérisée par le fait qu'**en tant qu'organe porteur deux flasques multifonctions (3, 4) sont prévus, pour lesquels chacun est fixé sur l'extrémité avant d'un longeron de cadre (1, 2) du châssis, et **par le fait qu'**à chaque flasque multifonctions (3, 4) est fixé de manière desserrable à l'avant latéralement à l'extérieur un support d'amortisseur à jambe de suspension (11, 12) et à l'arrière sur la partie supérieure un support de palier (9, 10) servant d'appui au bras oscillant stabilisateur (8).

3. Suspension avant de cabine selon la revendication 1, **caractérisée par le fait que** la cabine (5) est guidée transversalement par l'intermédiaire des consoles d'assemblage (13, 14) et articulée de manière à pouvoir basculer au niveau de l'extrémité avant du bras oscillant stabilisateur (8) par l'intermédiaire des paliers (20, 21) montés dans leurs orifices de palier (18, 19) et par l'intermédiaire d'axes de palier (94, 95) fuyant horizontalement et montés dans les consoles d'assemblage (13, 14).

4. Suspension avant de cabine selon la revendication 1, **caractérisée par le fait que** le bras oscillant stabilisateur (8) est soit réalisé d'une pièce estampée ou en fonte d'acier en seul élément ou bien composé de trois pièces individuelles préfabriquées, auquel cas dans le dernier cas les deux bras longitudinaux (15, 16) y compris tous les orifices de palier et les autres pièces sont formés chacun entièrement d'une pièce estampée ou en fonte d'acier et d'une barre transversale (17) formée soit d'un tube soit également d'une pièce estampée dans la masse et ces trois pièces sont soudées entre elles.

5. Suspension avant de cabine selon une des revendications 1 et 4, **caractérisée par le fait que** les bras longitudinaux (15, 16) du bras oscillant stabilisateur en forme de U (8) sont formés de telle manière qu'ils soient déformables de manière bien définie dans le sens longitudinal lors d'une collision frontale et, de ce fait, sont prévus pour absorber l'énergie.

6. Suspension avant de cabine selon la revendication 5, **caractérisée par le fait que** les bras longitudinaux (15, 16) du bras oscillant stabilisateur en forme de U (8) - vue de côté - sont légèrement coudé vers le haut entre l'extrémité avant et arrière et - vue de dessus - ont une forme atypique par exemple en forme de S ou de Z et, de ce fait, présentent des zones de pliage, cintrage ou coudage déformables de manière définie lors d'une collision frontale.

7. Suspension avant de cabine selon une des revendications 4 à 6, **caractérisée par le fait que** les deux bras longitudinaux (15, 16) sont placés en forme de flèche l'un par rapport à l'autre dans le bras oscillant stabilisateur (8) dans le sens où leurs extrémités arrière sont placés moins loin l'une de l'autre que leurs extrémités avant.
